# FASCICULE DE BREVET EUROPEEN

(11) **EP 0 864 094 B1**
(45) Date de publication et mention de la délivrance du brevet: **23.04.2003**
(21) Numéro de dépôt: 97943038.6
(22) Date de dépôt: 01.10.1997
(51) Int. Cl.: G01P 15/08

(54) **STRUCTURE COMPRENANT UNE PARTIE ISOLEE DANS UN SUBSTRAT MASSIF ET PROCEDE DE REALISATION D'UNE TELLE STRUCTURE**
STRUKTUR MIT EINEM ISOLIERTEN TEIL IN EINEM MASSIVEN SUBSTRAT UND VERFAHREN ZU DEREN ERZEUGUNG
STRUCTURE COMPRISING AN INSULATED PART IN A SOLID SUBSTRATE AND METHOD FOR PRODUCING SAME

(30) Priorité: 03.10.1996 FR 9612061
(43) Date de publication de la demande: 16.09.1998
(73) Titulaire: COMMISSARIAT A L'ENERGIE ATOMIQUE, 75015 Paris (FR)
(72) Inventeur: BRUN, Jean, F-38800 Champagnier (FR); VINCENT, Fabrice, F-38134 Saint-Julien-de-Ratz (FR); DANEL, Jean-Sébastien, F-38100 Grenoble (FR); BLANC, Henri, F-38134 Saint-Julien-de-Ratz (FR)
(74) Mandataire: Dubois-Chabert, Guy
(86) Numéro de dépôt international: FR9701734
(87) Numéro de publication internationale: WO98014787

(56) Documents cités:
- WO-A-96/07107
- DE-A- 3 741 036
- CAMPBELL J: "BURIED TECHNOLOGY WIDENS MARKET FOR ICDS" ELECTRONICS WORLD AND WIRELESS WORLD, vol. 100, no. 1704, 1 novembre 1994, page 892 XP000472854
- MENZ W: "THE LIGA TECHNIQUE-A NOVEL CONCEPT FOR MICROSTRUCTURES AND THE COMBINATION WITH SI-TECHNOLOGIES BY INJECTION MOLDING" PROCEEDINGS OF THE WORKSHOP ON MICRO ELECTRO MECHANICAL SYSTEMS INVESTIGATION OF MICRO STRUCTURES, SENSORS, ACTUATORS, MACHINES AND ROBOTS, NARA, JP., JAN. 30 - FEB. 2, 1991, no. WORKSHOP 4, 30 janvier 1991, INSTITUTE OF ELECTRICAL AND ELECTRONICS ENGINEERS, pages 69-73, XP000295545
- MATSUMOTO Y ET AL: "INTEGRATED SILICON CAPACITIVE ACCELEROMETER WITH PLL SERVO TECHNIQUE" SENSORS AND ACTUATORS A, vol. A39, no. 3, 1 décembre 1993, pages 209-217, XP000425006

## Description

### Domaine technique

L'invention se rapporte à une structure comprenant une partie isolée dans un substrat massif et à un procédé de réalisation d'une telle structure.

De telles structures trouvent des applications dans le domaine de la microélectronique pour la fabrication de circuits intégrés dont certaines parties doivent être isolées et exemptes d'effets parasites tels que des effets capacitifs parasites.

Les structures trouvent également des applications dans les domaines de la micromécanique pour la réalisation de capteurs tels que des accéléromètres ou des capteurs de pression, ainsi que pour la réalisation d'actionneurs. Dans le cas d'un accéléromètre, la partie isolée de la structure constitue, par exemple, une masse sismique de mesure des accélérations.

### Etat de la technique antérieure

La réalisation de capteurs tels que les capteurs de pression ou les accéléromètres fait largement appel à des structures de type SOI. Ces structures comportent une couche mince superficielle de silicium séparée d'une couche sous-jacente de silicium par une couche enterrée d'oxyde de silicium. La couche mince de silicium est localement libérée de la couche sous-jacente. Elle peut alors constituer, par exemple, la membrane d'un capteur de pression ou, lorsqu'elle est convenablement mise en forme, la masse sismique d'un accéléromètre. On peut se reporter à ce sujet aux documents (1) et (2) dont la référence est indiquée à la fin de la présente description.

La couche superficielle peut aussi être mise en forme de façon à réaliser un actionneur. Des actionneurs réalisés selon des procédés de micro-usinage sont décrits dans les documents (3) et (4) dont les références sont également indiquées à la fin de la description.

La couche d'oxyde enterrée a pour rôle de maintenir la structure formée dans la couche mince superficielle. Cet aspect apparaît en particulier dans le document (2) correspondant à un accéléromètre.

Toutefois, en raison de sa faible épaisseur, l'isolation électrique ou mécanique procurée par la couche isolante d'oxyde peut s'avérer insuffisante.

En particulier, des phénomènes de capacité parasite peuvent être induits entre la couche sous-jacente profonde de silicium et la couche superficielle de silicium.

Ces phénomènes peuvent affecter de façon négative les mesures d'un accéléromètre ou d'un autre capteur fonctionnant selon un principe de mesure capacitive.

Un autre désavantage des structures de type SOI et des dispositifs réalisés à partir de ces structures est lié à leur coût.

### Exposé de l'invention

La présente invention a pour but de proposer une structure avec une partie isolée électriquement dont la réalisation est peu coûteuse et qui ne présente pas les limitations évoquées ci-dessus.

Un autre but est également de proposer une structure avec une partie isolée ne subissant quasiment pas d'effets de capacité parasite, et utilisable pour la réalisation d'un capteur. Un but de l'invention est également de proposer un procédé de réalisation d'une telle structure.

Pour atteindre les buts mentionnés ci-dessus, l'invention a plus précisément pour objet une structure comportant une première partie et au moins une deuxième partie isolée électriquement de la première partie, les première et deuxième parties étant chacune formée dans la même plaque de matériau, lesdites première et deuxième parties ayant chacune sensiblement une même épaisseur, s'étendant sensiblement dans un même plan, et présentant au moins un bord mutuellement adjacent, et, les bords adjacents des première et deuxième parties étant séparés par un espacement. Conformément à l'invention, la structure comporte en outre au moins un joint de matériau isolant, disposé dans l'espacement, pour rendre les première et deuxième parties solidaires, le joint étant en contact mécanique avec au moins une portion de chaque plaque et s'étendant sensiblement sur toute l'épaisseur des plaques.

Le joint de matériau isolant a une fonction double. Une première fonction est de fournir une isolation électrique entre les première et deuxième parties. On peut noter que la qualité de l'isolation électrique peut être adaptée en jouant sur la largeur de l'espacement, et donc la largeur du joint, ainsi que sur le matériau utilisé pour former le joint. Une deuxième fonction du joint isolant est de maintenir la cohésion de la structure en rendant les première et deuxième parties solidaires. Le joint permet en particulier de maintenir les plaques avec leurs faces principales sensiblement dans un même plan.

Bien que la structure ainsi obtenue puisse être associée à une structure de support adaptée, la deuxième partie isolée peut être suffisamment éloignée du support ou séparée de la première partie pour éviter des influences capacitives, si celles-ci ne sont pas souhaitées.

Dans d'autres applications, au contraire, les bords adjacents des première et deuxième parties peuvent être configurés de telle manière et disposées suffisamment proches pour former une capacité variable.

La mesure de cette capacité et de ses variations, permet alors de déterminer un éventuel déplacement entre les première et deuxième parties. Cet aspect, permettant la réalisation d'un accéléromètre ou d'un actionneur, est exposé plus en détail dans la suite de la description.

Selon un aspect avantageux, les première et deuxième parties peuvent présenter des formes complémentaires. L'espacement entre les parties est alors sensiblement uniforme.

Les première et deuxième parties peuvent être simplement des plaques juxtaposées, obtenues en découpant un substrat en deux parties selon une ligne. Cependant, selon une variante, la deuxième partie peut être une portion de plaque de matériau découpée selon un motif déterminé dans la plaque de matériau formant la première partie.

Dans la suite du texte, on ne fait référence qu'à une seule première partie et à une seule deuxième partie. Il est toutefois possible de concevoir la structure avec une première partie et une pluralité de deuxièmes parties, isolées mutuellement et isolées de la première partie. En particulier, il est possible de découper dans les plaques de matériau formant la première partie, une pluralité de portions de plaques qui forment ainsi une pluralité de deuxièmes parties de la structure.

Selon les applications envisagées, et en particulier pour la réalisation de capteurs tels qu'un accéléromètre par exemple, ou d'un actionneur, le matériau de la plaque formant respectivement les première et deuxième parties de la structure peut être choisi non-isolant. On entend par matériau non-isolant un matériau semi-conducteur ou conducteur.

A titre d'exemple, le matériau est choisi parmi les matériaux semi-conducteurs suivants AsGa, Si, SiC, les métaux suivants Au, W, Ti, Cr, Al, Fe, Ni, Mo et les alliages de ces métaux.

L'invention a également pour objet un procédé de réalisation d'une structure comportant une première partie et au moins une deuxième partie, coplanaire, isolée électriquement de la première partie. Le procédé comprend les étapes suivantes :
a) découpe d'une plaque de substrat pour définir dans la plaque une première et une deuxième parties, au moins une portion de substrat, dite de maintien, reliant les première et deuxième parties, étant préservée lors de la découpe,
b) substitution d'un joint isolant de maintien, reliant au moins une portion des première et deuxième parties sur sensiblement toute leur épaisseur, à ladite portion de substrat de maintien reliant les première et deuxième parties de substrat.

On entend par substitution d'un joint isolant de maintien à la portion de substrat de maintien reliant les première et deuxième parties, soit la mise en place dudit joint et l'élimination de la portion de substrat, soit la transformation de la portion de substrat de maintien en un joint isolant.

Le procédé de l'invention peut être mis en oeuvre selon plusieurs possibilités.

Selon une première possibilité, l'étape a) comporte la formation d'au moins une tranchée traversante dans la plaque de substrat, séparant pour l'essentiel les première et deuxième parties. L'étape b) comporte alors le remplissage de la tranchée par un matériau isolant formant le joint de maintien entre les première et deuxième parties, et l'élimination de la portion de substrat de maintien reliant les première et deuxième parties.

On considère que la tranchée traversante sépare pour l'essentiel les première et deuxième parties de la plaque de substrat lorsqu'elle sépare ces deux parties, sur l'ensemble de leur(s) bord(s) adjacent(s), à l'exception d'une ou plusieurs portions de substrat qui relient les première et deuxième parties pour maintenir la cohésion de la structure au cours du procédé de fabrication. Ces portions sont désignées par portion de maintien.

Selon une variante de mise en oeuvre du procédé, l'étape a) comporte la formation d'au moins une tranchée non traversante dans la plaque de substrat, séparant pour l'essentiel les première et les deuxième parties, la tranchée présentant un fond de tranchée formant la portion de substrat de maintien reliant les première et deuxièmes parties. Dans ce cas, l'étape b) comporte le remplissage de la tranchée avec un matériau isolant formant le joint entre les première et deuxième parties, et l'élimination du fond de tranchée.

On considère que la tranchée est non traversante lorsqu'il subsiste un fond de tranchée qui relie les première et deuxième parties.

Ce fond de tranchée maintient la cohésion de la structure jusqu'à la mise en place du joint isolant.

Quand ce joint est formé, le fond est éliminé par exemple par un amincissement mécanique, chimique ou physique de la plaque de substrat.

Les deux possibilités de mise en oeuvre du procédé exposées ci-dessus ne sont pas exclusives l'une de l'autre. En effet, lors de la gravure des tranchées, il est possible de préserver à la fois un fond de tranchée et des portions de substrat de maintien reliant les première et deuxième parties sur toute l'épaisseur de la plaque.

Après l'élimination du fond de tranchée, et éventuellement l'élimination des autres parties de substrat de maintien reliant les première et deuxième parties, les première et deuxième parties sont électriquement isolées.

Selon une autre variante encore du procédé de l'invention, la découpe de la plaque lors de l'étape a) comprend le percement d'une pluralité de trous juxtaposés, séparés par des parois latérales de trous. Dans ce cas, l'étape b) comprend l'oxydation des parois latérales, et, le cas échéant, le fond des trous pour les transformer en un joint isolant de maintien.

Dans la mise en oeuvre de l'invention conforme à cette variante, les portions de substrat de maintien qui relient initialement les première et deuxième parties après la découpe de la plaque de substrat, comportent les parois séparant les trous. Les portions de substrat de maintien peuvent également comporter le fond des trous si ceux-ci ne sont pas percés de part en part. Ces parties ne sont pas éliminées au même titre que les portions de substrat dans les mises en oeuvre précédemment décrites, mais sont transformées, par oxydation, pour former le joint isolant de maintien.

D'autres caractéristiques et avantages de l'invention ressortiront mieux de la description qui va suivre, en référence aux figures des dessins annexés, donnée à titre purement illustratif et non limitatif.

### Brève description des figures

- les figures 1 et 2 sont respectivement une vue de dessus et une coupe d'une plaque dans laquelle on a formé des tranchées traversantes conformément a un premier mode de mise en oeuvre de l'invention,
- les figures 3A et 4 sont respectivement une vue de dessus et une coupe de la structure des figures 1 et 2 garnie d'un matériau isolant,
- la figure 3B est une vue de dessus d'une plaque, comparable à la figure 3A, et illustre une variante de réalisation,
- la figure 5 est une coupe de la structure des figures 1 et 2 garnie d'un matériau isolant selon une autre technique de garnissage,
- les figures 6 et 7 sont respectivement une vue de dessus et une coupe de la structure obtenue conformément au premier mode de mise en oeuvre,
- les figures 8 et 9 sont respectivement une vue de dessus et en coupe d'une plaque dans laquelle on a formé une tranchée conformément à un deuxième mode de mise en oeuvre de l'invention.
- La figure 10 est une coupe illustrant le garnissage de la tranchée de la structure des figures 8 et 9,
- la figure 11 est une coupe d'une structure obtenue conformément au deuxième mode de mise en oeuvre de l'invention,
- les figures 12 et 13 sont respectivement une coupe et une vue de dessus d'une plaque dans laquelle on a pratiqué des trous conformément à un troisième mode de mise en oeuvre de l'invention,
- les figures 14 et 15 sont respectivement une coupe et une vue de dessus d'une structure obtenue conformément au troisième mode de mise en oeuvre de l'invention.

### Description détaillée de modes de mise en oeuvre de l'invention

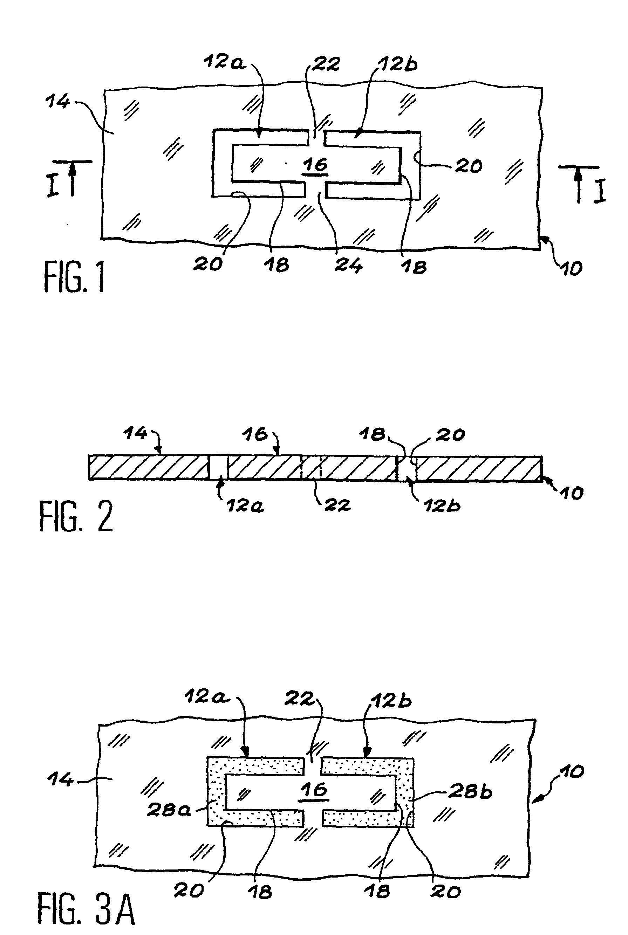

Un premier mode de mise en oeuvre de l'invention va être décrit en référence aux figures 1 à 7.

La figure 1 est une vue de dessus d'une plaque de substrat 10 en un matériau de préférence non-isolant tel qu'un semi-conducteur, un métal, ou un alliage de métaux, par exemple.

La plaque de substrat peut être une plaque massive ou une plaque formée de plusieurs couches de matériau différents dont au moins l'une est de préférence en un matériau non-isolant.

Comme le montre la figure 1, on a pratiqué dans la plaque 10 deux tranchées 12a, 12b en forme de U qui découpent la plaque en une première partie 14 et une deuxième partie 16.

Plus précisément, les tranchées 12a et 12b forment un espacement qui sépare des bords adjacents des première et deuxième parties. Ces bords adjacents sont désignés par les références 18 et 20.

On remarque que les tranchées 12a et 12b n'isolent pas entièrement la deuxième partie 16 de la première partie 14. Ces parties sont maintenues solidaires l'une de l'autre par deux portions de substrat 22 et 24 préservées lors de la gravure des tranchées 12a et 12b. Les portions de substrats 22 et 24, encore appelés "ponts" ont plusieurs fonctions. La première fonction est, comme indiqué ci-dessus, de maintenir la cohésion des parties 14 et 16, et en particulier d'éviter que la partie 16 ne se désolidarise de la partie 14. Une fonction est également de maintenir la partie 14 dans une position fixe, de sorte qu'un espacement uniforme sépare les bords adjacents 18 et 20. Une fonction est enfin de maintenir les parties 14 et 16 sensiblement dans un même plan.

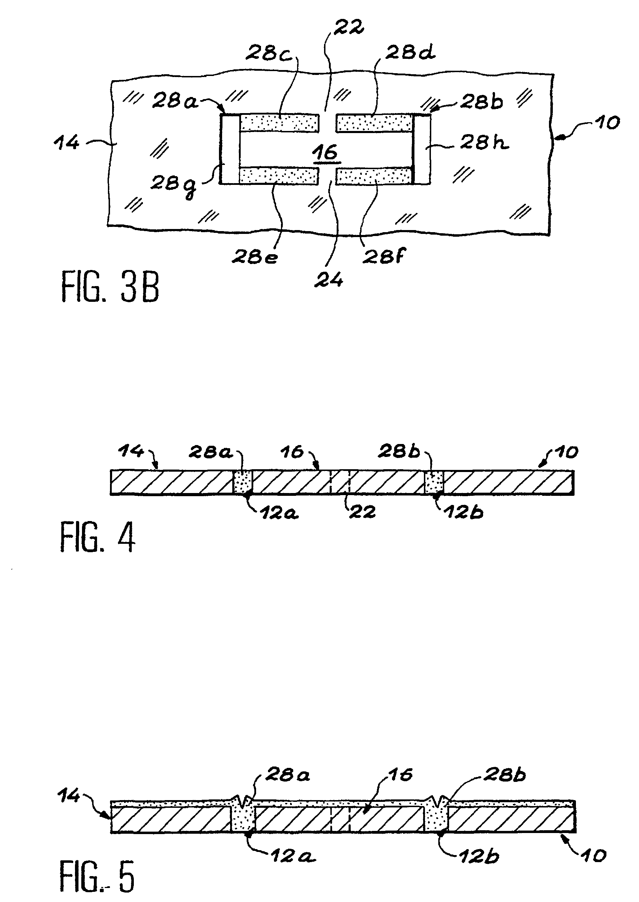

Le caractère coplanaire des parties 14 et 16 apparaît plus clairement sur la figure 2 qui est une coupe selon le plan I-I de la plaque représentée à la figure 1.

La figure 2 montre également que les tranchées 12a et 12b sont des tranchées traversantes, c'est-à-dire qui s'étendent sur toute l'épaisseur de la plaque 10.

Les tranchées 12a et 12b peuvent être, selon le matériau de la plaque 10, pratiquées par gravure sèche ou humide, ou en mettant en oeuvre une technique d'usinage par ultrasons ou au laser.

Des équipement actuels de gravure profonde anisotrope permettent de graver des tranchées profondes dans des substrats. Par exemple, il est possible de graver des tranchées traversantes dans une plaque de silicium avec une épaisseur de l'ordre de 500 µm ou plus.

Une deuxième étape consiste à substituer aux ponts 22 et 24 un autre moyen de maintien de la deuxième partie 16, sur la première partie 14 de la plaque. Ce moyen doit être isolant.

Un matériau isolant est par conséquent mis en place ou formé dans les tranchées 12a et 12b, comme le montre la figure 3A qui est une vue de dessus.

La mise en place du matériau isolant dans les tranchées peut comporter par exemple le dépôt d'une goutte de colle isolante au centre de la plaque 10, la mise en place d'un film de mousse en silicone sur la face de la plaque comportant la goutte, puis la mise sous presse de l'ensemble pour forcer la colle dans les tranchées 12a et 12b. La colle est par exemple une colle de type E505 de marque Epotechni. On obtient ainsi la structure montrée en coupe à la figure 4.

La colle forme des joints isolants indiqués par les références 28a, 28b et qui emplissent les tranchées 12a et 12b. On constate à la figure 4 que le joint isolant 28a, 28b relie les bords adjacents 18 et 20 des parties 14 et 16 et s'étend sur toute l'épaisseur de ces parties, l'épaisseur étant mesurée perpendiculairement aux faces principales de la plaque 10.

La colle peut être remplacée par tout polymère ou résine époxy liquide ou silice liquide qui est susceptible de polymériser ou sécher après son introduction dans les tranchées 12a, 12b. Le polymère ou la résine sont toutefois choisis pour être des isolants électriques.

Selon une variante illustrée à la figure 3B, on ne réalise les joints isolants que dans des portions des tranchées 12a et 12b, situées sur les côtés de la deuxième partie 16 reliés aux ponts 22 et 24. Les joints isolants portent les références 28c, 28d, 28e et 28f. Des portions 28g et 28h des tranchées 12a et 12b sont laissées libres. Cette disposition permet de limiter des phénomènes de contrainte associés aux variations de volume (dilatation) du (des) joint(s) isolant(s) pendant sa (leur) réalisation ou pendant l'utilisation de la structure.

En effet, la variation du volume de joints isolants disposés dans les portions 28g et 28h serait susceptible d'entraîner un effort de compression ou de tension dans le sens de la longueur de la partie 16, et de constituer éventuellement une gêne.

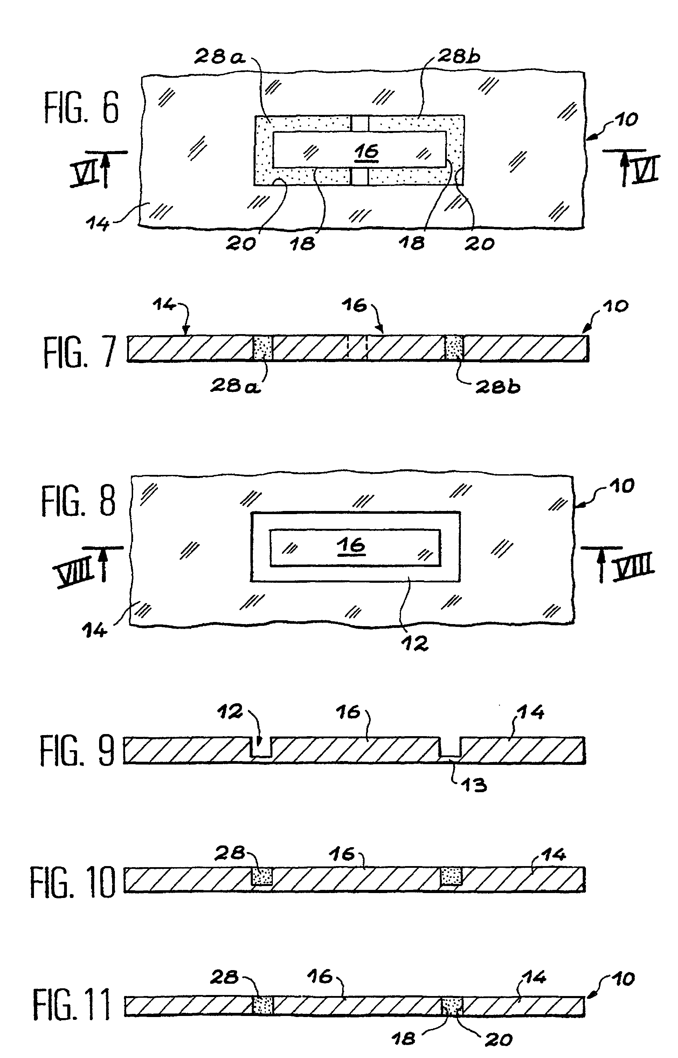

La figure 5 montre en coupe un autre procédé de formation des joints isolants 28a et 28b. Selon ce procédé, on forme une couche de matériau isolant par dépôt ou par croissance cristalline. Il s'agit, par exemple d'une couche de silice ou de nitrure de silicium. Ce matériau remplit alors les tranchées 12a et 12b où il forme le joint isolant de maintien et recouvre l'une des faces principales des parties 14 et 16 de la plaque 10.

Après la formation du joint isolant de maintien dans les tranchées, la réalisation de la structure est poursuivie par l'élimination des ponts 22 et 24 qui sont devenus inutiles et dont les fonctions de maintien sont à présent assurées par le(s) joint(s) isolant(s). Les ponts 22 et 24 sont éliminés par exemple par gravure pour obtenir la structure illustrée aux figures 6 et 7.

Selon une variante cependant, les ponts 22 et 24 peuvent aussi être conservés et transformés en matériau isolant par un traitement adapté, par exemple par une oxydation thermique.

On note que la figure 7 est une coupe selon le plan VI-VI de la structure représentée à la figure 6.

Après l'élimination (ou l'oxydation) des ponts 22 et 24, il n'existe plus de lien électrique entre les première et deuxième parties.

Comme le montrent les figures 6 et 7, la structure comporte à présent une première et une deuxième parties 14, 16, formées chacune d'une plaque de matériau, mutuellement isolées, sensiblement coplanaires et de même épaisseur. Deux joints de matériau isolant 28a et 28b disposés dans un espacement qui sépare les première et deuxième parties les rendent solidaires. Ces joints sont chacun en contact mécanique avec au moins une portion de chaque partie, sur leurs bords en regard et sensiblement sur toute leur épaisseur.

La partie 16 est ainsi isolée électriquement de la partie 14. La possibilité de prévoir une forte épaisseur du joint de maintien permet d'obtenir une isolation de qualité, susceptible de supporter des tensions élevées.

Par ailleurs, la partie 16 peut être utilisée comme une membrane mobile ou une masse sismique mobile par rapport à la partie 14. Pour la réalisation d'un capteur, les bords adjacents peuvent être découpés de façon appropriée afin de former, par exemple, les armatures de condensateurs de mesure.

Un autre mode de mise en oeuvre de l'invention est illustré par les figures 8 à 11. En raison de fortes similarités avec les figures précédentes, les parties identiques ou similaires portent les mêmes références. Il est possible ainsi de se reporter également à la description qui précède.

La figure 8 montre une plaque 10 dans laquelle on a gravé une tranchée 12 qui sépare, dans la plaque, une partie 16 centrale et une partie 14 entourant la partie 16.

La figure 9 qui est une coupe selon le plan VIII-VIII de la structure de la figure 8 permet de constater que, contrairement aux tranchées visibles sur la figure 2, la tranchée 12 dans le deuxième mode de réalisation n'est pas une tranchée traversante. Lors de la gravure de la tranchée 12, qui peut avoir lieu selon les techniques de gravure évoquée ci-dessus, on préserve un fond de tranchée 13.

Le fond de tranchée remplit des fonctions analogues à celles des ponts 22, 24 visibles aux figures 1 à 5.

En effet, le fond de tranchée 13 maintient la partie 16 de la plaque dans une position fixe, coplanaire à la partie 14, et assure la cohésion mécanique de la structure.

Le fond de tranchée 13 présente, par exemple, une épaisseur de l'ordre de 300 µm, pour une tranchée 12 d'une profondeur de l'ordre de 500 µm.

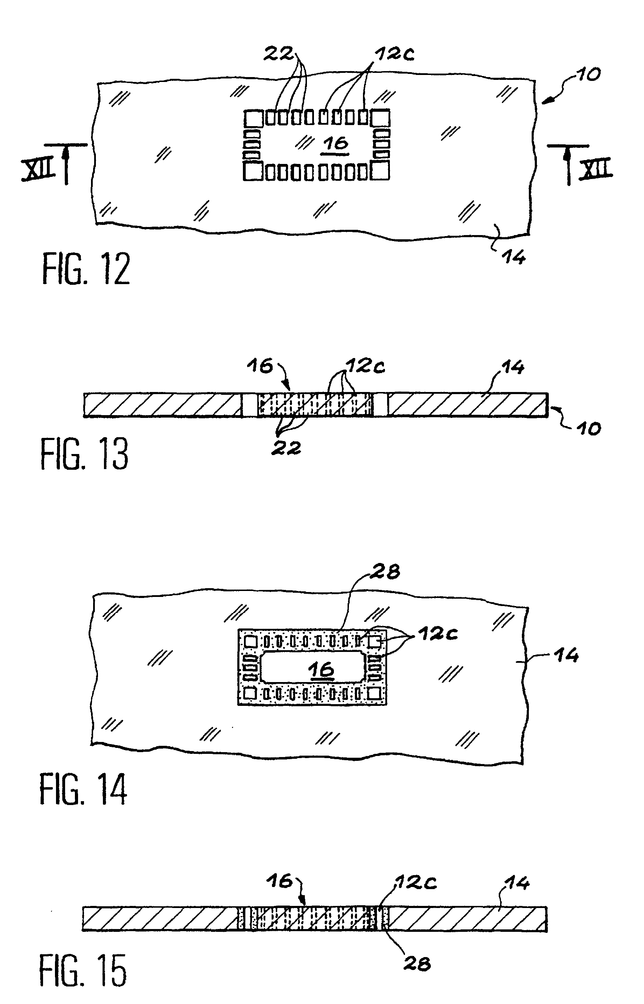

La figure 10 montre une étape de remplissage des tranchées avec un matériau isolant électrique afin de former un joint isolant de maintien 28. Le joint 28 est, par exemple, réalisé en polymère, en résine, en silice ou en nitrure de silicium. Sa mise en place dans la tranchée peut avoir lieu, par exemple, par dépôt ou par pressage comme décrit précédemment.

Après la formation du joint 28, le fond de tranchée 13 est éliminé par rodage, par gravure sèche, humide ou électrochimique.

L'élimination du fond de tranchée s'accompagne aussi d'un amincissement des parties 14 et 16 de la plaque de substrat pour obtenir la structure représentée en coupe à la figure 11.

Le joint 28 est en contact mécanique avec les bords adjacents 18, 20 des première et deuxième parties et s'étend sur toute l'épaisseur des parties 14 et 16 de la plaque 10.

Les figures 12 à 15 illustrent enfin un troisième mode de mise en oeuvre de l'invention.

Pour faciliter la lecture des figures, les parties identiques ou similaires à celles des figures précédentes portent toujours les mêmes références.

La figure 12 montre une plaque de silicium 10 dans laquelle on a délimité une première partie 14 et une deuxième partie 16. Les parties 14 et 16 sont délimitées par un ensemble de trous juxtaposés 12c découpés dans la plaque. Les trous 12c sont séparés deux à deux par des parois latérales de trous 22.

Comme le montre la figure 13, qui est une coupe selon le plan XII-XII indiqué sur la figure 12, les trous 12c traversent de part en part la plaque 10. Toutefois, il est possible, selon une variante, de réaliser des trous non traversants. On laisse alors subsister des "fonds de trou" avec une épaisseur de quelques micromètres.

Les parois 22, séparant latéralement les trous 12c, de même que les "fonds de trou" jouent un rôle de maintien mécanique comparable aux ponts 22 et 24 (voir les figures 1 à 5) du premier mode de réalisation et aux fonds de tranchée 13 (voir figures 9, 10) du deuxième mode de réalisation.

Les parois 22 permettent en particulier de maintenir la partie centrale 16 solidaire de la partie 14 de la plaque 10.

Les portions de substrat que constituent les parois 22 et éventuellement les fonds de trous ne sont pas éliminées comme dans les modes de mise en oeuvre précédemment décrits mais sont transformés pour les rendre isolants. La substitution d'un joint isolant à ces portions de substrat se traduit ici par une oxydation.

La taille des trous 12c, l'épaisseur des parois 22 qui les séparent, l'épaisseur des "fonds de trou" et les conditions d'oxydation sont choisis tels que l'oxydation des parois 22 et, le cas échéant, des "fonds de trou" ait lieu dans toute leur épaisseur. L'oxydation est par exemple, une oxydation thermique effectuée à une température de l'ordre de 1050°C. Ces parties transformées en oxyde de silicium deviennent alors des isolants électriques et constituent le joint de maintien au sens de la présente invention. Les figures 14 et 15 illustrent la structure ainsi obtenue. Sur ces figures, les parties oxydées sont indiquées avec la référence 28.

Dans les figures décrites ci-dessus, la deuxième partie, délimitée dans la plaque, est, pour des raisons de simplification, représentée de forme sensiblement rectangulaire.

Toutefois, d'autres formes peuvent être envisagées. En particulier les bords adjacents des première et deuxième parties peuvent être configurés en peignes interdigités pour constituer un condensateur variable dont la capacité est modifiée par des mouvements relatifs de la première et deuxième parties.

Pour d'autres applications, une structure obtenue conformément à l'invention constitue également un substrat peu coûteux avec une ou plusieurs parties mutuellement isolées.

### DOCUMENTS CITES

***(1)***
   Novel High-Performance Pressure Sensors Using Double SOI Structures
   Gwiy-Sang Chung et al;
   IEEE 1991, pages 676-680.
***(2)***
   FR-A-2 700 065
***(3)***
   Thermal Microactuators for Surface-Micromachining Process
   de J.H. Comtois et al.
   SPIE, vol 2642, pages 10-21.
***(4)***
   Comb actuators for xy-microstages
   de V.P. Jaecklin et al.
   Sensors and Actuators A, 39 (1993), 83-89

## Revendications

1. Substrat comportant une première partie (14) et au moins une deuxième partie (16) isolée électriquement de la première partie (14), les première et deuxième parties étant chacune formée dans la même plaque d'un matériau non-isolant, lesdites première et deuxième parties ayant chacune sensiblement une même épaisseur, s'étendant sensiblement dans un même plan, et présentant au moins un bord (18, 20) mutuellement adjacent, et, les bords adjacents des première et deuxième parties étant séparés par un espacement (12a, 12b), **caractérisé en ce que** la structure comporte en outre au moins un joint (28a, 28b) de matériau isolant, disposé dans l'espacement, pour rendre les première et deuxième parties solidaires, le joint (28a, 28b) étant en contact mécanique avec au moins une portion de chaque plaque et s'étendant sensiblement sur toute l'épaisseur des plaques.

2. Substrat selon la revendication 1, **caractérisé en ce que** les bords adjacents (18, 20) des première et deuxième parties présentent une forme complémentaire.

3. Substrat selon la revendication 1 ou 2, **caractérisé en ce que** la deuxième partie (16) est une portion de plaque de matériau découpée dans une plaque de matériau formant la première partie (14).

4. Substrat selon la revendication 1, **caractérisé en ce que** le matériau est choisi parmi les matériaux semi-conducteurs suivants AsGa, Si, SiC, les métaux suivants Au, W, Ti, Cr, Al, Fe, Ni, Mo et les alliages de ces métaux.

5. Substrat selon l'une des revendications 1 à 4, **caractérisé en ce que** les première (14) et deuxième (16) parties forment respectivement les parties fixe et mobile d'un capteur ou d'un actionneur.

6. Procédé de réalisation d'un substrat selon l'une quelconque des revendications précédentes, **caractérisé en ce qu'**il comporte les étapes suivantes :
a) découpage d'une plaque de substrat (10) composé d'un matériau non-isolant pour définir dans la plaque une première (14) et une deuxième (16) parties, au moins une portion de substrat, dite de maintien (22, 24), reliant les première et deuxième parties, étant préservée lors de la découpe,
b) substitution d'un joint isolant de maintien (28, 28a, 28b), reliant au moins une portion des première et deuxième parties (14, 16) sur sensiblement toute leur épaisseur, à ladite portion de substrat de maintien.

7. Procédé selon la revendication 6, **caractérisé en ce que** l'étape a) comporte la formation d'au moins une tranchée traversante (12a, 12b) dans la plaque de substrat (10), séparant pour l'essentiel les première et deuxième parties (14, 16) et **en ce que** l'étape b) comporte le remplissage de la tranchée (12a, 12b) par un matériau isolant formant le joint de maintien (28a, 28b) entre les première et deuxième parties (14, 16), et l'élimination de la portion de substrat de maintien (22, 24) reliant les première et deuxième parties.

8. Procédé selon la revendication 7, **caractérisé en ce qu'**on élimine la portion de substrat de maintien reliant les première et deuxième parties par gravure.

9. Procédé selon la revendication 6, **caractérisé en ce que** ladite portion de substrat de maintien (22, 24) est transformée en matériau électriquement isolant.

10. Procédé selon la revendication 9, **caractérisé en ce que** l'étape a) comporte la formation d'au moins une tranchée (12) non traversante dans la plaque de substrat, séparant pour l'essentiel les première et les deuxième parties (14, 16), la tranchée (12) présentant un fond de tranchée (13) formant la portion de substrat de maintien reliant les première et deuxièmes parties, et **en ce que** l'étape b) comporte le remplissage de la tranchée (12) avec un matériau isolant formant le joint de maintien (28) entre les première et deuxième parties, et l'élimination du fond de tranchée (13).

11. Procédé selon la revendication 10, **caractérisé en ce qu'**on élimine le fond de tranchée (13) par un amincissement mécanique, chimique ou physique de la plaque de substrat.

12. Procédé selon la revendication 6 pour la réalisation de la structure dans une plaque de silicium, **caractérisé en ce que** le découpage de la plaque lors de l'étape a) comprend le percement d'une pluralité de trous juxtaposés (12c), séparés par des parois latérales de trous (22), et **en ce que** l'étape b) comprend l'oxydation des parois latérales (22), et le cas échéant, le fond des trous, pour les transformer en un joint isolant de maintien (28).

## Patentansprüche

1. Substrat mit einem ersten Teilstück (14) und wenigstens einem zweiten Teilstück (16), elektrisch isoliert vom ersten Teilstück (14), wobei sowohl das erste als auch das zweite Teilstück in derselben Platte aus nichtisolierendem Material ausgebildet sind und sowohl das erste als auch das zweite Teilstück im Wesentlichen eine selbe Dicke haben, sich im Wesentlichen in einer selben Ebene erstrecken und benachbarte bzw. sich gegenüberstehende Ränder (18, 20) haben, wobei diese benachbarten Ränder des ersten und des zweiten Teilstücks durch einen Zwischenraum (12a, 12b) getrennt sind,
**dadurch gekennzeichnet, dass** die Struktur außerdem wenigstens eine Dichtung bzw. Verbindung (28a, 28b) aus isolierendem Material umfasst, angebracht in dem Zwischenraum, um das erste Teilstück und das zweite Teilstück zu verbinden, wobei diese Verbindung (28a, 28b) mechanischen Kontakt hat mit wenigstens einem Teilbereich jeder Platte und sich im Wesentlichen über die gesamte Dicke der Platte erstreckt.

2. Substrat nach Anspruch 1, **dadurch gekennzeichnet, dass** die benachbarten Ränder (18, 20) des ersten und zweiten Teils eine komplementäre Form aufweisen.

3. Substrat nach Anspruch 1 oder 2, **dadurch gekennzeichnet, dass** das zweite Teilstück (16) ein Plattenteilstück ist, herausgeschnitten aus einer Platte aus dem gleichen Material wie die Platte (14).

4. Substrat nach Anspruch 1, **dadurch gekennzeichnet, dass** das Material ausgewählt wird unter den Halbleitermaterialien AsGa, Si, SiC, den Metallen Au, W, Ti, Cr, Al, Fe, Ni, Mo und den Legierungen dieser Metalle.

5. Substrat nach einem der Ansprüche 1 bis 4, **dadurch gekennzeichnet, dass** das erste (14) und das zweite (16) Teilstück jeweils den festen und den beweglichen Teil eines Sensors oder eines Aktuators bilden.

6. Verfahren zur Herstellung eines Substrats nach einem der vorangehenden Ansprüche, **dadurch gekennzeichnet, dass** es die folgenden Schritte umfasst:
a) Zuschneiden bzw. Ausschneiden einer Substratplatte (10) aus nichtisolierendem Material, um in der Platte ein erstes (14) und ein zweites (16) Teilstück zu definieren, wobei wenigstens ein das erste und das zweite Teilstück verbindender, Zusammenhaltsbereich (22, 24) genannter Teilbereich nicht ausschnitten wird,
b) Ersetzen des ausgeschnittenen Teils des Substrats durch eine isolierende Verbindung (28, 28a, 28b), die wenigstens einen Teil des ersten und zweiten Teilstücks (14, 16) über im Wesentlichen ihre gesamte Dicke verbindet.

7. Verfahren nach Anspruch 6, **dadurch gekennzeichnet, dass** der Schritt a) die Bildung wenigstens einer die Substratplatte durchquerenden Aussparung (12a, 12b) in der Substratplatte (10) umfasst, die das erste und das zweite Teilstück (14, 16) im Wesentlichen trennt, und dadurch, dass der Schritt b) das Ausfüllen der Aussparungen (12a, 12b) mit einem isolierenden Material umfasst, das die Zusammenhaltsverbindung (28a, 28b) zwischen dem ersten und dem zweiten Teil (14, 16) bildet, und die Beseitigung des Zusammenhaltsbereichs (22, 24) des Substrats umfasst, der das erste und zweite Teilstück verbindet.

8. Verfahren nach Anspruch 7, **dadurch gekennzeichnet, dass** man den Zusammenhaltsbereich des Substrats, der das erste und zweite Teilstück verbindet, durch Ätzung beseitigt.

9. Verfahren nach Anspruch 6, **dadurch gekennzeichnet, dass** der genannte Teil des Zusammenhaltsbereichs (22, 24) des Substrats in ein elektrisch isolierendes Material umgewandelt bzw. überführt wird.

10. Verfahren nach Anspruch 9, **dadurch gekennzeichnet, dass** der Schritt a) die Bildung von wenigstens einer die Substratplatte nicht durchquerenden Aussparung (12) umfasst, die das erste und das zweite Teilstück (14, 16) im Wesentlichen trennt, wobei die Aussparung (12) einen Boden (13) hat, der den Zusammenhaltsbereich des Substrats bildet, der das erste und das zweite Teilstück verbindet, und dadurch, dass der Schritt b) das Füllen der Aussparung (12) mit einem isolierenden Material, das die Zusammenhaltsverbindung (28) zwischen dem ersten und dem zweiten Teilstück bildet, und die Beseitigung des Bodens der Aussparung (13) umfasst.

11. Verfahren nach Anspruch 10, **dadurch gekennzeichnet, dass** man den Boden der Aussparung (13) durch ein mechanisches, chemisches oder physikalisches Dünnermachen der Substratplatte beseitigt.

12. Verfahren nach Anspruch 6 zur Herstellung der Struktur in einer Siliciumplatte, **dadurch gekennzeichnet, dass** das Zuschneiden bzw. Ausschneiden der Platte in Schritt a) das Herstellen einer Vielzahl von nebeneinander liegenden Löchern (12c) umfasst, getrennt durch Seitenwände (22) der Löcher, und dadurch, dass der Schritt b) die Oxidation der Seitenwände (22) und ggf. des Bodens der Löcher umfasst, um sie in eine isolierende Zusammenhaltsverbindung (28) umzuwandeln bzw. zu überführen.

## Claims

1. Structure comprising a first part (14) and at least one second part (16) electrically insulated from the first part (14), the first and second parts each being formed in the same wafer of a material, said first and second parts each having substantially one and the same thickness, extending substantially in one and the same plane, and having at least one mutually adjacent edge (18, 20), and the adjacent edges of the first and second parts being separated by a spacing (12a, 12b), **characterized in that** the structure comprises an addition, at least one joint (28a, 28b) of insulating material arranged in the spacing, in order to make the first and second parts integral, the joint (28a, 28b) being in mechanical contact with at least a portion of each wafer and extending substantially over the entire thickness of the wafers.

2. Structure according to claim 1, **characterized in that** the adjacent edges (18, 20) of the first and second parts have a complimentary shape.

3. Structure according to claim 1 or 2, **characterized in that** the second part (16) is a portion of a wafer of material cut in a wafer of material forming the first part (14).

4. Structure according to claim 1, **characterized in that** the material is chosen from among the semiconductor materials AsGa, Si, SiC, the following metals Au, W, Ti, Cr, Al, Fe, Ni, Mo and the alloys of these metals.

5. Structure according to one of claims 1 to 4, **characterized in that** the first (14) and second (16) parts form respectively the fixed part and the mobile part of a sensor or of an actuator.

6. Method of producing a structure according to any one of the preceding claims, **characterized in that** it comprises the following steps:
a) cutting a substrate wafer (10) of a non-insulating material in order to define within the wafer a fist (14) and a second part (16), at least one portion of substrate, called the holding portion (22, 24), linking the first and second parts being preserved at the time of the cutting,
b) substitution by a holding insulating joint (28, 28a, 28b), linking at least one portion of the first and second parts (14, 16) over substantially their entire thickness, to said holding portion of substrate.

7. Method according to claim 6, **characterized in that** step a) comprises the formation of at least one cut (12a, 12b) that goes right through the substrate wafer (10), separating, for the most part, the first and second parts (14, 16) and **in that** step b) comprises the filling of the cut (12a, 12b) by an insulating material forming the holding joint (28a, 28b) between the first and second parts (14, 16), and the removal of the holding portion of substrate (22, 24) linking the first and second parts.

8. Method according to claim 7, **characterized in that** the holding portion of substrate linking the first and second parts is removed by etching.

9. Method according to claim 6, **characterized in that** said holding portion of substrate (22, 24) is converted into an electrically insulating material.

10. Method according to claim 9, **characterized in that** step a) comprises the formation of at least one cut (12) that does not go right through the substrate wafer, which separates for the most part the.first and second parts (14, 16), the cut (12) having a cut bottom (13) forming the holding portion of substrate linking the first and second parts, and **in that** step b) comprises the filling of the cut (12) with an insulating material forming the holding joint (28) between the first and second parts, and the removal of the bottom of the cut (13).

11. Method according to claim 10, **characterized in that** the bottom of the cut (13) is removed by mechanical, chemical or physical thinning down of the substrate wafer.

12. Method according to claim 6 for the production of the structure in a wafer or silicon, **characterized in that** the cutting of the wafer during step a) comprises piercing it with a plurality of adjacent holes (22c), separated by the side walls (22) of the holes, and **in that** step b) includes the oxidation of the side walls (22), and, if the need arises, the bottoms of the holes, in order to convert them into an insulating holding joint (28).
